# EUROPÄISCHE PATENTSCHRIFT

(11) **EP 1 917 134 B1**
(45) Veröffentlichungstag und Bekanntmachung des Hinweises auf die Patenterteilung: **26.10.2011**
(21) Anmeldenummer: 05762979.2
(22) Anmeldetag: 28.06.2005
(51) Int. Cl.: B29C 45/56, B29C 45/14, B29C 43/14, B29C 43/20

(54) **VERFAHREN UND WERKZEUG ZUR HERSTELLUNG EINES BAUTEILS AUS KUNSTSTOFF MIT EINER DEKORATIONS-SCHICHT UND EINER TRÄGER-SCHICHT MIT EINEM ZUSÄTZLICH AN DIESER ANGEORDNETEN FORMTEIL**
METHOD AND TOOL FOR PRODUCING A COMPONENT FROM PLASTIC WITH A DECORATIVE LAYER, A BACKING LAYER AND A MOULDED PART THAT IS ATTACHED TO SAID COMPONENT
PROCEDE ET OUTIL POUR LA FABRICATION D'UNE PIECE STRUCTURALE EN PLASTIQUE POURVUE D'UNE COUCHE DE DECORATION ET D'UNE COUCHE DE SUPPORT ET D'UNE PIECE MOULEE AJOUTEE A LADITE PIECE STRUCTURALE

(43) Veröffentlichungstag der Anmeldung: 07.05.2008
(73) Patentinhaber: Faurecia Innenraum Systeme GmbH, 76767 Hagenbach (DE)
(72) Erfinder: SCHILLES, Wilfried, 76870 Kandel (DE)
(74) Vertreter: Schatt, Markus F.
(86) Internationale Anmeldenummer: PCT/EP2005/006915
(87) Internationale Veröffentlichungsnummer: WO 2007/000174

(56) Entgegenhaltungen:
- EP-A- 0 730 947
- WO-A-2004/099480
- DE-C1- 10 124 122
- US-A1- 2003 194 542
- PATENT ABSTRACTS OF JAPAN Bd. 2003, Nr. 12, 5. Dezember 2003 (2003-12-05) -& JP 2004 262119 A (KASAI KOGYO CO LTD), 24. September 2004 (2004-09-24)

## Beschreibung

Die Erfindung betrifft ein Verfahren sowie ein Werkzeug zur Herstellung eines Kunststoff-Bauteils mit einer Dekorations-Schicht und einer Träger-Schicht mit einem zusätzlichen Formteil.

Das herzustellende Bauteil ist insbesondere ein Kunststoff-Bauteil mit Faser-Anteilen.

Das zusätzliche Formteil ist an dem hergestellten Bauteil angeordnet und unter diesem wird im folgenden insbesondere ein Anbauteil, ein Retainer-Element, ein AufnahmeElement, ein Verstärkungs-Element oder eine Rippe oder auch allgemein ein auf der Rückseite des Bauteils zu integrierendes zusätzliches Bauteil verstanden.

Bei der Herstellung von Kunststoff-Bauteilen aus mehreren Schichten mit zusätzlich daran angeordneten Formteilen nach dem Stand der Technik wird in einem ersten Schritt die Herstellung des Bauteils mit einem Pressverform-Werkzeug in einem Kaschier- und Konturgebungs-Prozess aus einer Träger-Schicht und einer Dekorations-Schicht durchgeführt und einem zweiten Schritt das zusätzliche Formteil durch Anspritzen oder Ankleben oder Anschweißen an das Bauteil angebracht.

Im Gegensatz dazu können Kunststoff-Bauteilen mit einer Träger-Schicht und einer Dekorations-Schicht auch mittels eines Hinterspritz-Verfahrens hergestellt werden. Dabei wird ein Dekorations-Material in ein Spritz-Werkzeug eingebracht und mit einem thermoplastischen Werkstoff hinterspritzt, der durch Abkühlung erstarrt. Bei der Herstellung von Formteilen mittels eines Spritzguss-Werkzeugs können diese einstufig oder mehrstufig hergestellt werden.

Aus der ED 0 730 947 A2 ist bekannt, an eine Faserverbundmatte durch Hinterspritzen oder Hinterpressen von thermoplastisch verarbeitbaren Kunststoffen ein Anbauelement anzuformen.

Aus der DE 101 24 122 C1 ist ein Verfahren und eine Vorrichtung zum Herstellung eiens faserverstärkten Kunststoffteils bekannt, bei dem bzw. bei der in einer Spritzgießform an eine Verbundplatte eine Konturkulisse mittels Spritz-Prägen angeformt wird.

Beispielsweise ist aus der EP 0 371 425 B1 ein zweistufiges Verfahren bekannt, bei dem ein als Dekorations-Schicht vorgesehenes Folien-Material verformt und tiefgezogen wird und in einem weiteren Verfahrens-Schritt in eine Spritzguss-Werkzeug eingelegt und mit einem thermoplastischen Kunststoff hinterspritzt wird. Dieses Verfahren eignet sich jedoch nur für einfache gestaltete Formteile.

Weiterhin sind z.B. aus der EP 0 320 925 A1 Verfahren bekannt, bei denen das Dekorations-Material in das Spritzguss-Werkzeug eingelegt wird und mit einem thermoplastischen Kunststoff mit 10 bis 130 bar hinterspritzt wird, wobei das Dekorations-Material durch den Druck des thermoplastischen Materials ausgeformt und in die Spitzguss-Form gedrückt wird. Auch bei diesem Verfahren können nur verhältnismäßig einfach gestaltete Formteile hergestellt werden.

Gemäß der DE 197 29 780 C1 wurden bei kompliziert geformten Formkörpern auch Schieber eingesetzt, durch deren Bewegung sichergestellt wird, dass Spritzguss-Material in alle Bereiche der Spritzguss-Form eingedrückt wird, wobei sich diese Maßnahme jedoch als sehr nachteilig erwiesen hat, da diese zur Faltenbildung und zur Beschädigung der Dekorations-Oberfläche führt und auch die Dekorations-Schicht derart flachgedrückt wird, so dass eine dekorative Prägung nicht mehr möglich ist.

Dieser wird auf der rückseitigen Werkzeughälfte an diejenige Stelle des TrägerElements gefahren, an der dann das Anbauteil entstehen soll, wobei diese Stellung gleichzeitig die formgebende Stellung des Anbauteiles ist. Von einer Einspritzstelle wird dann Polypropylen mit einem Spritzdruck üblicherweise von 150 bis 350 bar in den Werkzeugbereich eingespritzt. Die Anwendung eines derartig hohen Druckes ist unter anderem dadurch erforderlich, dass die dünnen Materialspalte im Werkzeug zur Formgebung des Anbauteils mit dem Polypropylen vollständig gefüllt werden müssen. Dabei zunächst wird ein Schieber in Position gebracht und nachfolgend der Werkzeugoder Spritz-Spalt mit Polypropylen gefüllt. Nachteilig an diesem Verfahren ist, dass sich eine verhältnismäßig geringe Wandstärke des Anbauteils am Übergangsbereich zum Trägerelement ergibt, so dass sich an dieser Stelle eine geringe Anbindefläche ergibt.

Das Einspritzen erfolgt kurze Zeit nach dem Schließen des Werkzeuges, so dass die Fasermatte noch nicht erkaltet, d.h. das Material noch plastifiziert und somit weich ist. Weiterhin bilden sich bei einem großen Anspritzdruck aufgrund der Weichheit des Bauteils Abzeichnungen auf derjenigen Seite des Trägerelements bzw. der Fasermatte, die der Seite des Anbauteils gegenüber liegt. Diese Seite wird üblicherweise mit Dekormaterial überdeckt, so dass diese Abzeichnungen nachteilig für das Erscheinungsbild sind.

Zur Vermeidung dieser Probleme wird zur Bildung von komplizierteren Formteilen in der DE 197 29 780 C1 eine Lösung vorgeschlagen, bei der Dekormaterial in ein Spritzguss-Werkzeug eingelegt wird, das dann bei geschlossenem Werkzeug mit einem Gas unter Druck beaufschlagt wird so dass das Dekormaterial in die Kavitäten des Spritzguss Werkzeuges gedrückt wird und danach das Hinterspritzen des Dekormaterials mit einem Kunststoff erfolgt. Aufgrund der gleichmäßigen Druckverteilung im Werkzeug wird dadurch ein homogenes Eindrücken des Dekormaterials in die Kavitäten des Spritzguss erreicht.

Die Aufgabe der Erfindung ist, ein Verfahren zur Herstellung eines Kunststoff-Bauteils mit einer Dekorations-Schicht und einer Träger-Schicht mit einem zusätzlichen Formteil sowie ein Werkzeug zur Herstellung eines solchen Bauteils bereit zu stellen, das verhältnismäßig kompliziert gestaltet ist und die Herstellung eines stabilen Anbauteils ermöglicht.

Diese Aufgaben werden mit den unabhängigen Patentansprüchen gelöst. Weitere Ausführungsformen sind in den auf diese jeweils rückbezogenen Unteransprüchen angegeben.

Erfindungsgemäß wird ein Verfahren zur Herstellung eines Bauteils mit einer Träger-Schicht und einer Dekorations-Schicht mit einem daran angeordneten zusätzlichen Formteil aus Kunststorff nach Anspruch 1 vorgeschlagen.

Bei dem Herstellungsverfahren kann insbesondere der in die Kavität eindringende Kunststoff im Bereich der Kavität einen Duck unterhalb von 10 bar aufweisen. Das Volumen des in die Kavität eingeführten Kunststoffs kann in einer bevorzugten Ausführungsform 70% des Volumens der Kavität beträgen. Auch kann vorgesehen sein, den Kunststoff bei einer Temperatur von 200 Grad Celsius +/- 30 Grad Celsius in die Kavität einzuführen.

Bei dem erfindungsgemäßen Herstellungsverfahren kann weiterhin vorgesehen sein, dass während der Bewegung des Schiebers in seine Endstellung das Bauteil-Material eine Temperatur im Bereich zwischen 100 und 170 Grad Celsius besitzt.

Bei dem Herstellungsverfahren kann der in die Kavität einzulassende Kunststoff ein Polypropylen sein. Weiterhin kann die Trägerschicht in ihrem Ausgangszustand aus Polypropylen aus Flachs oder Kenaf, Sisal, Leinen oder Baumwolle oder Glasfaser gebildet sein. In einer Weiterbildung der Erfindung kann vor dem Einlassen des Kunststoffs auf der Trägerschicht eine weitere Schicht zur Bildung einer Dekorations-Schicht aufgebracht werden.

Bei dem Herstellungsverfahren kann das zusätzliche Formteil zumindest ein Anbauteil oder ein von der Trägerschicht wegstehendes Struktur-Element oder stabförmiges Gebilde sein. Auch kann das zusätzliche Formteil eine Halterung zur Aufnahme von Komponenten oder weiterer Bauteile sein. Weiterhin kann das zusätzliche Formteil ein Anschluss-Element oder eine Rippe oder ein Abstandselement oder ein Gestaltungselement zur Verbesserung der Festigkeit des Bauteils sein.

Erfindungsgemäß wird auch eine Vorrichtung zur Herstellung eines Bauteils mit einer Trägerschicht und mit zumindest einem zusätzlichen Formteil nach Anspruch 12 vorgeschlagen.

Bei der Vorrichtung kann insbesondere der Schieber derart gestaltet sein, dass sich auf seiner der Trägerschicht des Bauteils zugewandten unteren Schieberfläche eine sich zumindest von einer der Verdrängungsflächen aus erstreckende Beabstandung zwischen der unteren Schieberfläche und der dieser zugewandten Oberfläche der Trägerschicht ergibt, so dass ein Anschluss-Element im Bereich der Übergangsstelle des Anbauteils am Bauteil gestaltbar ist.

Die Kavität und der Schieber können derart gebildet sein, dass das Anbauteil zumindest ein von dem Bauteil wegstehendes Struktur-Element oder ein stabförmiges Gebilde ist. Auch können die Kavität und der Schieber derart gebildet sein, dass das Anbauteil eine Halterung zur Aufnahme von Komponenten oder weiterer Bauteile ist oder auch dass das Anbauteil ein Anschluss-Element oder eine Rippe oder ein Gestaltungselement zur Verbesserung der Festigkeit des Bauteils ist.

Ein Vorteil der erfindungsgemäßen Lösung ist, dass sich aufgrund von geringen Spritzdrücken, die bei dem erfindungsgemäßen Verfahren zum Erstellen von Anbauteilen ausreichen, große Anbindeflächen oder Verstärkungs-Elemente zwischen dem Anbauteil und dem Trägerteil ergeben. Dadurch ist eine Übertragung von größeren Kräften von dem Anbauteil auf das Trägerelement möglich. Außerdem wird eine Verformung des Trägerelements, d.h. eine Abzeichnung oder Wölbung nahezu ausgeschlossen; so dass sich eine geringe Druckbelastung des Dekormaterials ergibt.

Da die erfindungsgemäße Herstellung des Anbauteils auf der Innenseite eines Bauteils mit einem Einspritzen des Kunststoffs bzw. des Polypropylens in die entsprechende Kavität bei geringem Druck erfolgt, besteht nicht die Gefahr, dass sich auf der Außenseite des Bauteils Abzeichnungen bilden. Dies ist insbesondere deshalb von Vorteil, da diese Seite des Bauteils üblicherweise dessen Sichtseite ist. Es kann also auf der Außen- oder Sichtseite mit großer Zuverlässigkeit eine glatte Oberfläche erzielt werden.

Es bilden sich bei den erfindungsgemäßen Herstellungsverfahren keine Abzeichnungen auf der Gegenseite oder der Sichtseite des Grund-Elements.

Im Folgenden werden die Erfindungen an Hand der beigefügten Figuren beschrieben, die zeigen:
- Figur 1 eine schematische Seitenansicht einer Ausführungsform des mit dem erfindungsgemäßen Herstellungsverfahren herstellbaren zusätzlichen Formteils mit einem Ausschnitt des Bauteils, an dem dieses angebracht ist,
- Figur 2 eine Seitenansicht des Ausschnitts des Bauteils mit dem zusätzlichen Formteil nach der Figur 1 entlang der Linie ll-11 in der Figur 1;
- Figur 3 einen Schnitt durch einen Ausschnitt des Bauteils mit dem zusätzlichen Formteil nach den Figuren 1 und 2;
- Figur 4 in schematischer Darstellung eine Anordnung eines Press-Werkzeugs mit einer Polypropyten-Matte in einer Situation eines ersten Schrittes des erfindungsgemäßen Herstellungsverfahrens, wobei das Press-Werkzeug ein Unterteil, ein Oberteil und einem in dem Unterteil angeordnete Kavität mit einem Schieber zur Herstellung des Anbauteils aufweist;

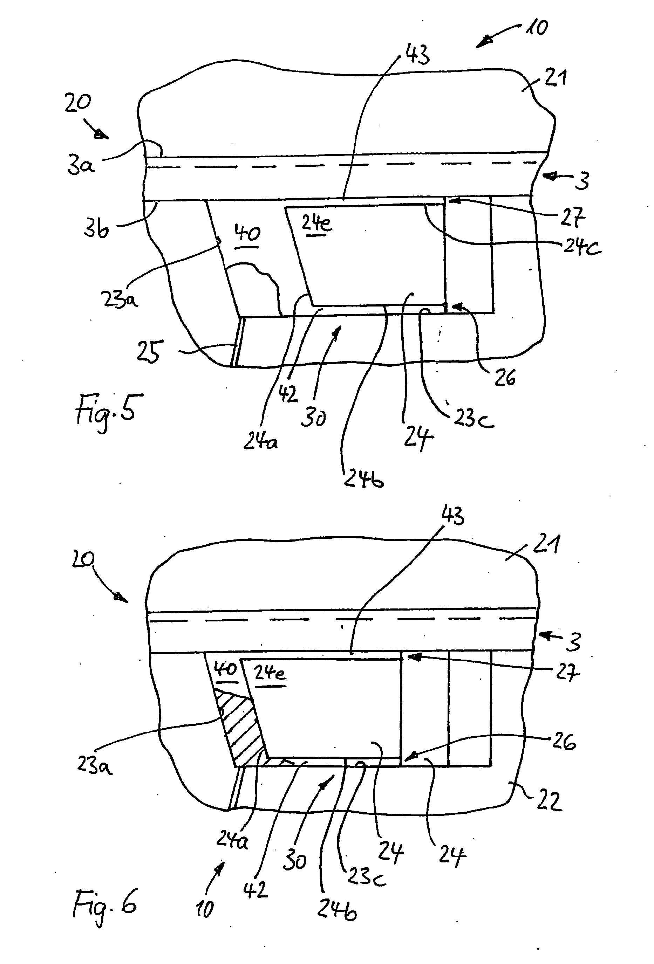

- Figur 5 die Anordnung nach der Figur 3 in einer Situation eines zweiten Schrittes des erfindungsgemäßen Herstellungsverfahrens, in dem Kunststoff in die Kavität eingelassen worden ist;
- Figur 6 die Anordnung nach der Figur 3 in einer Situation eines weiteren Schrittes, in der der Schieber ein Stück weit in der vorgesehenen Bewegungsrichtung verschoben worden ist;
- Figur 7 die Anordnung nach der Figur 3 in einer Situation eines weiteren Schrittes des erfindungsgemäßen Herstellungsverfahrens, in dem der Schieber in seine Endstellung bewegt ist;
- Figur 8 eine schematische Darstellung einer Ausführungsform eines Press-Werkzeugs mit der Schieber-Einrichtung zur Herstellung eines zusätzlichen Formteils in einem Verfahrens-Schritt, in dem der Schieber sich in der zurückgefahrenen oder Ausgangs-Stellung befindet und Material in die Kavität eingebracht worden ist;
- Figur 9 eine schematische Darstellung einer Ausführungsform eines Press-Werkzeugs mit der Schieber Einrichtung nach der Figur 8, bei der der Schieber in seine Endstellung verschoben und das gesamte zur Herstellung des zusätzlichen Formteils zu verwendende Material in die Kavität eingebracht worden ist

Bei dem erfindungsgemäßen Verfahren wird ein Pressverform-Verfahren mittels eines Pressverform-Werkzeugs zur Bildung einer Kombination einer Träger-Schicht und einer Dekorations-Schicht durchgeführt, das kombiniert wird mit einem Niederdruck-Spritzverfahren, bei dem mit verhältnismäßig geringem Druck Kunststoff in eine Kavität mit einem darin beweglichen Schieber-Element zur Bildung des zusätzlichen Formteils eingeführt wird, ohne diese Kavität vollständig zu füllen. Der formgebende Schritt erfolgt durch eine entsprechende Bewegung des Schiebers. Dementsprechend bezieht sich die erfindungsgemäße Vorrichtung zur Herstellung eines Kunststoff-Bauteils mit einer Dekorations-Schicht und einer Träger-Schicht mit einem zusätzlichen Formteil auf ein Pressverform-Werkzeug, das zusätzlich eine Kavität mit einem Schieber-Element aufweist.

Das Bauteil wird dabei aus einem Material für eine Dekorations-Schicht in Form eines Zuschnitts aus einem geeigneten Ausgangsmaterial, und einem Material für eine Träger-Schicht in Form einer plastifizierten Matte hergestellt. Diese Matten werden in ein Press-Werkzeug eingelegt, bei dem eine Verformung der ersten und der zweiten Schicht bzw. Matte sowie die Verbindung der beiden Schichten bzw. Matten miteinander durch das Zusammenfahren eines ersten, der ersten Schicht zugewandten Werkzeugteils und eines zweiten, der zweiten Schicht zugewandten Werkzeugteils erfolgt. Die Verbindung des Zuschnitts und der Matte erfolgt bei einem Anpress-Druck innerhalb des Press-Werkzeugs bei 0,5 bis 5 bar.

Das erfindungsgemäße Vorrichtung weist eine die Kontur des herzustellenden Bauteils bestimmendes Press-Verformwerkzeug 20 mit zumindest einem ersten, der ersten Schicht zugewandten Werkzeugteil 21 oder einer ersten Werkzeug-Hälfte mit einer ersten dreidimensionalen Verformungskontur oder konturgebenden Anlagefläche 21 a und einem zweiten, der zweiten Schicht zugewandten Werkzeugteil 22 oder einer zweiten Werkzeug-Hälfte mit einer zweiten dreidimensionalen Verformungskontur oder konturgebenden Anlagefläche 22a auf. Die Werkzeugteile 21, 22 werden von einem Druck-Geber (nicht dargestellt) zueinander bewegt, um die Verformung der ersten Schicht 12 bzw. der Dekorations-Schicht und der zweiten Schicht 14 bzw. der Träger-Schicht sowie die Verbindung der beiden Schichten 12, 14 miteinander durch das Zusammenfahren des ersten und des zweiten Werkzeugteils 12 bzw. 14 zu bewirken. Das erste Werkzeugteil 12 kann an einem ersten Werkzeughalter oder einer Montageplatte M1 und zweite Werkzeugteil 14 kann an einem zweiten Werkzeughalter oder einer Montageplatte M2 angebracht sein.

Die erste und die zweite Schicht sind Schichten, die sich unter Druck miteinander verbinden und z.B. zumindest bereichsweise verschmelzen oder verkrallen lassen. Generell können beide Schichten bzw. Matten mehrschichtig sein, wobei auch mehrere Schichten der ersten oder der zweiten Schicht mit dem Verfahren bzw. der Vorrichtung nach der Erfindung verformt und miteinander verbunden werden können.

Bei der Herstellung des Bauteils mit einer Träger-Schicht und einer Dekorations-Schicht müssen die einander zugewandten Seiten der Dekorations-Schicht und der Träger-Schicht miteinander durch von dem Werkzeug ausgeübten Druck und gegebenenfalls unter Anwendung von Wärme miteinander verbindbar sein. Dazu kann die der Träger-Schicht zugewandte Schicht der Dekorations-Schicht insbesondere die Eigenschaft aufweisen, sich mit der Träger-Schicht unter Druck mechanisch zu verbinden, z.B. durch mechanische Verkrallung von an der genannten Seite der Dekorations-Schicht angebrachten Fäden oder Haaren mit der gegebenenfalls angeschmolzenen Oberfläche der Träger-Schicht. Dazu kann zumindest die der Träger-Schicht zugewandte Oberfläche der Dekorations-Schicht aus einem Gewebe gebildet sein, das z.B. ein Vlies, ein Filz, ein Flachgewebe, ein Rundstrick, sein kann. Eine Verbindung von Dekorations-Schicht mit der Träger-Schicht kann auch durch Verschmelzen der einander zugewandten Oberflächen unter Anwendung von Druck durch das Werkzeug und gegebenenfalls unter Anwendung von Wärme erfolgen. Ein Verschmelzen wird erreicht, wenn die Dekorations-Schicht Schaum-Bestandteile enthält, die zur gleichen Material-Familie gehören wie die zur Verschmelzung vorgesehene Träger-Schicht.

Als Ausgangsmaterial für die Dekorations-Schicht kann dabei ein textiles Gewebe, ein Schaum-Kunstleder, eine Kunststoff-Folie oder ein Leder verwendet werden. Bei der Verwendung eines textilien Gewebes zur Bildung der Dekorations-Schicht können als Ausgangsmaterial textile Materialien oder Folien oder eine Kombination aus beiden oder eine Kombination der genannten Alternativen verwendet werden. Die Dekorations-Schicht kann bei dem herzustellenden Bauteil dazu vorgesehen sein, die Haptik-Eigenschaften des Endprodukts auf der entsprechenden Seite des Bauteils zu optimieren. Dazu kann die Dekorations-Schicht auch Schaum-Bestandteile aufweisen. Beispielsweise kann die Dekorations-Schicht ein Verbund aus textilen Materialien, einem Schaum und einem Vlies-Material sein. Als Schaum kann ein PP-Schaum oder PE-Schaum oder ein auf PU aufbauender Schaum verwendet werden.

Das Ausgangsmaterial für die Träger-Schicht kann insbesondere Kunststoff-Anteile aufweisen und speziell eine Polypropylen (PP)-gebundene Fasermatte sein. Diese kann insbesondere durch Wärmezufuhr plastifizierbar sein. Die Träger-Schicht ist vorzugsweise aus einem Fasermaterial, vorzugsweise aus Naturfasern oder Glasfasern sowie aus Kunststoff-Fasern und insbesondere Polypropylen (PP)-Fasem gebildet. Die Naturfasern können aus Flachs oder Kenaf, Sisal, Leinen oder Baumwolle gebildet sein. Bei der Träger-Schicht kann es sich auch um mehrschichtiges Gebilde wie z.B. einer Träger-Schicht und einer Verstärkungs-Schicht, wie z.B. eine Schicht aus Glasfaser-Gewebe handeln.

Dieses Faser-Material zur Bildung der Träger-Schicht wird in einem vorbereitenden oder einem dem Verfahren vorangehenden Schritt zu einer Matte geformt Anschließend werden unter Anwendung von Druck und Temperatur unter Aufschmelzung des Kunststoff-Anteiles ein miteinander verbundenes plastisches Matten-Material als eine Träger-Schicht gebildet, die in dem Pressverform-Werkzeug mit der plastifizierten Dekorations-Schicht zu dem Bauteil verbunden werden.

Bei der Erfindung geht es um die Herstellung allgemein eines zusätzlichen Formteils an einer Trägerschicht einer Kombination der Träger-Schicht mit einer Dekorations-Schicht des Bauteils im Rahmen der Herstellung eines Strukturbauteils aus Kunststoff und insbesondere Polypropylen.

Das zusätzliche Formteil oder Anbauteil kann allgemein eine Halterung zur Aufnahme von Komponenten oder weiterer Bauteile oder zur Befestigung des Bauteils dienen, an dem dieses vorgesehen ist. Das Anbauteil kann auch ein Retainer-Element, ein Anschluss-Element oder eine Rippe oder ein Abstandselement oder ein Gestaltungselement z.B. zur Verbesserung der Festigkeit des Bauteils sein. Ein Retainer Element dient üblicherweise zur Aufnahme eines Verbindungs- oder Befestigungs-Elements wie eines Clip-Elements, durch das ein weiteres Struktur-Bauteil an dem zuvor genannten Struktur-Bauteil befestigt bzw. angeklipt werden kann. Als Beispiel für die Herstellung des zusätzlichen Formteils wird im folgenden die Herstellung eines Retainer-Elements auf einer Träger-Schicht aus Polypropylen beschrieben.

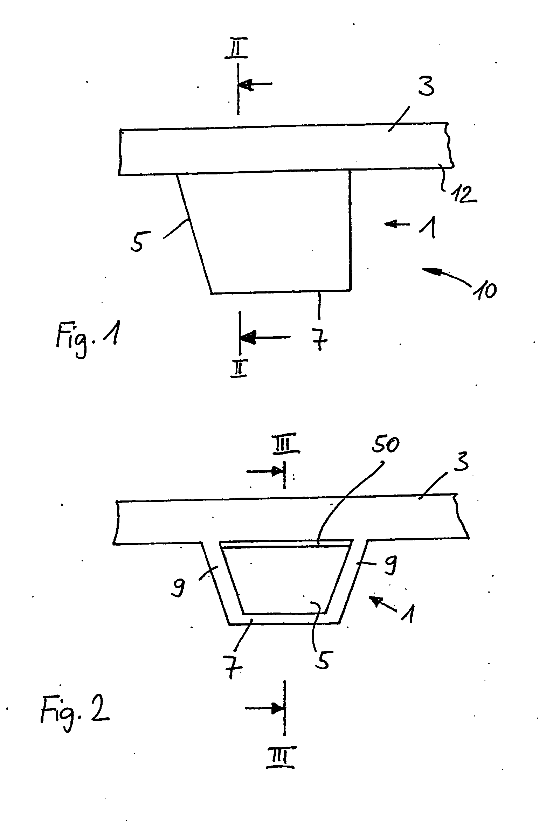

Das in dem nachfolgend beschriebenen Beispiel herzustellende zusätzlich an der Träger-Schicht angeordnete Formteil 1 in Form eines Retainer-Elements ist schematisch in den Schnitt-Darstellungen der Figuren 1 und 2 gezeigt. Das Retainer-Element 1 ist Bestandteil eines herzustellenden Bauteils und erstreckt sich als eine Halterung oder Auskragung oder Klammer von der Trägerschicht A1 desselben aus. Die Figur 1 zeigt einen Schnitt durch das Formteil, das als Retainer-Element dargestellt ist. In der dargestellten Ausführungsform umfasst das Retainer-Element 1 einen Steg 5 mit einer ersten Seite 5a und einer zweiten Seite 5b und eine Haube oder ein Dach 7 und ist somit kastenförmig gebildet. Die dargestellte Ausführungsform des Anbauteils 1 oder Retainer-Elements weist weiterhin zumindest eine Seitenwand 9 auf. Allgemein kann das herzustellende Anbauteil auch weniger oder mehr als die in den Figuren 1 und 2 dargestellten Bestandteile aufweisen und ist das herzustellende Anbauteil 1 aus zumindest einem Element gebildet, das ein von der Trägerschicht 12 wegstehendes Struktur-Element ist und ein längliches, stabförmiges Gebilde oder ein Wandelement sein kann. Im Falle des in den Figuren 1 und 2 dargestellten Retainer-Elements ist dieses als Steg oder Seitenteil 5 realisiert.

Das Bauteil 3 wird bei dem erfindungsgemäßen Herstellungsverfahren zumindest aus einer ersten oder Träger-Schicht 12 und zumindest einer weiteren oder Dekorations-Schicht 14 gebildet. Für die weitere Beschreibung wird diejenige Seite als erste Seite oder Innenseite 3b des Bauteils 3 bezeichnet, auf der das zusätzliche Formteil oder Anbauteil 1 gelegen ist, während diejenige Seite, die entgegengesetzt zur Innenseite 3a bzw. zum Anbauteil 1 gelegen ist, im folgenden als zweite Seite oder Außenseite 3a bezeichnet wird. Bei der dargestellten Ausführungsform ist die erste Schicht 12 eine Trägerschicht und auf derjenigen Seite oder Innenseite 3a des Bauteils 3 gelegen, auf der das Anbauteil zur Formung des Anbauteils gelegen ist, so dass die freie Oberfläche der Innenseite die Oberfläche der Trägerschicht 12 bildet

Die Dekorations-Schicht wird in einem vorbereitenden Verfahrens-Schritt in einen verformbaren Zustand gebracht.

Ebenfalls in einem vorbereitenden Verfahrensschritt wird die Matte zur Bildung der Trägerschicht duch Einwirkung von Temperatur plastifiziert.

Anschließend werden unter Anwendung von Druck unter Aufschmelzung des Kunststoff-Anteiles durch eine Pressverformung ein miteinander verbundenes plastisches Matten-Material gebildet, wobei die Werkzeug-Hälften üblicherweise temperiert sind. Das plastische Matten-Material und die Schicht für das Dekor-Material wird in das Pressverform-Werkzeug 20 mit einer ersten und einer zweiten Werkzeug-Hälfte 21 bzw. 22 mit jeweils einer konturgebenden Anlagefläche 21a bzw. 22a eingebracht und durch Zusammenfahren der Werkzeug-Teile in dem Press-Verformwerkzeug dreidimensional verformt. Durch die Anwendung eines entsprechenden Druckes werden die zumindest zwei Schichten 12, 14 in dem Pressverform-Werkzeug 20 miteinander verbunden und zur Bildung des Bauteils 3 mit zumindest zwei Schichten 12, 14 auf seine spätere Form und auf seine Wandstärke gepresst, d.h. in die spätere Endkontur geformt. Dabei entsteht eine Verbindung zwischen den Schichten zur Bildung des Bauteils mit der Trägerschicht 12 und der Dekorations-Schicht 14 und gegebenenfalls weiterer Zwischen-Schichten (nicht dargestellt).

Die einander zugewandten Seiten der Werkzeug-Hälften 21 bzw. 22 oder des Oberteils 21 und des Unterteils 22 des Werkzeugs 20 bilden aufgrund der Press- und Umform-Vorganges also die Form des herzustellenden Bauteils. Das Werkzeug 20 ist funktional gesehen eine Verdichtungs- und Umform- Station, die vorzugsweise jeweils eine Temperierungs-Einrichtung in dem Oberteil 21 und dem Unterteil 22 des Werkzeugs 20 aufweist, um die Matten in einem verformungsfähigen Zustand zu halten. Das Werkzeug selbst ist zwischen 20 und 60°C temperiert. Die Aufheizung der Trägerschicht 12 in Form einer Matte erfolgt dabei vorzugsweise in einer separaten Station vor dem Einlegen der Matte in das Werkzeug 20.

Vor dem Press-Vorgang können die Ausgangsmaterialien der Trägerschicht 12 in dem Unterteil 22 und der weiteren Schicht 14 in dem Oberteil 21 des Werkzeugs eingelegt sein, bevor diese gepresst werden. Alternativ können die Schichten 12, 14 auch zusammen in einer der Werkzeug-Hälften 21 oder 22 eingelegt sein. Durch ein entsprechendes Zusammenfahren von Unterteil 21 und Oberteil 22 und bei Anwendung einer entsprechenden Temperatur und eines entsprechenden Druckes werden die Ausgangsmaterialien des Bauteils 3 in die Werkzeug-Kontur und somit mittels der Kontur-gebenden Anlageflächen 21a, 22a in die geforderte BauteilGeometrie gebracht. Bei der Verwendung von mehreren Schichten, also im Beispiel einer Trägerschicht und einer weiteren Schicht werden diese miteinander in Verbindung gebracht.

Zur Herstellung des zusätzlichen Formteils 1 als Bestandteil des herzustellenden Bauteils 3 ist in der zweiten Werkzeug-Hälfte 22 mit der Anlagefläche 22a, die zur Anlage des Materials für die Träger-Schicht 12 vorgesehen ist, eine Niederdruck-Spritzeinrichtung 10 zur Herstellung zumindest des zusätzlichen Formteils wie z.B. eines Anbauteils durch ein Niederdruck-Spritzverfahren mit einer Guss-Form 10a angeordnet. Die Niederdruck-Spritzeinrichtung 10 weist hierfür einen mittels einer StellEinrichtung (nicht dargestellt) betätigbaren Schieber 24 sowie einen Zuführkanal 25 zur Zuführung eines Kunststoff-Materials in flüssiger Form vorzugsweise mittels einer Extruder-Schnecke S auf.

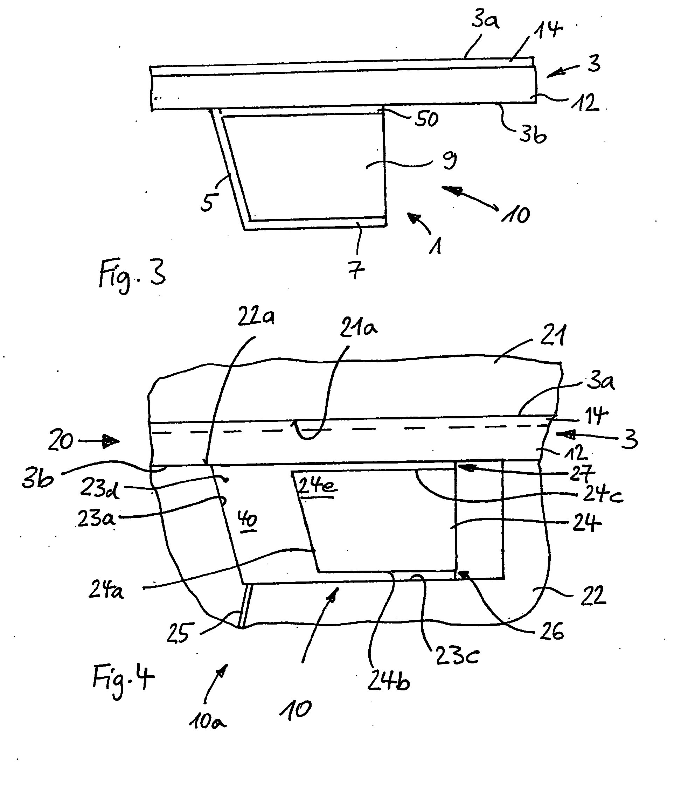

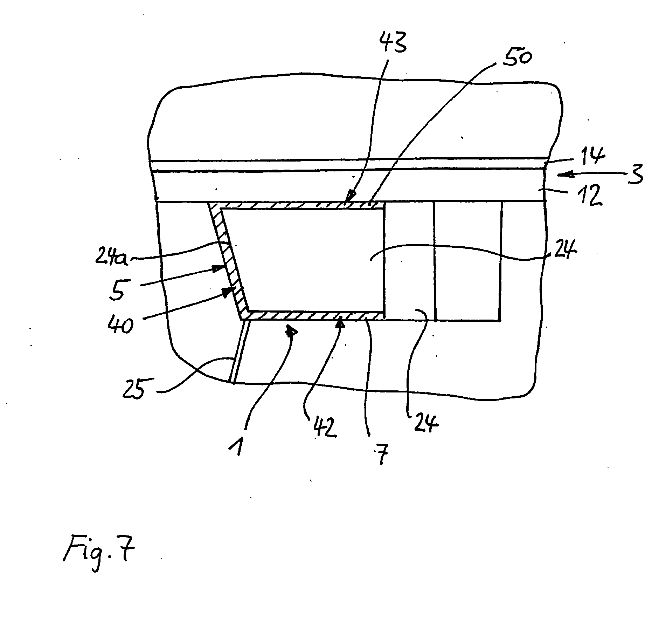

Die Figur 3 zeigt die Niederdruck-Spritzeinrichtung 10 zur Herstellung eines zusätzlichen Formteils und hier eines Retainer-Elements 1 mit einem Bauteil 3 in einem Ausgangszustand. Die Materialien zur Bildung des Bauteils 3 ist in dem Werkzeug 20 mit dem Werkzeug-Oberteil 21 und einem Werkzeug-Unterteil 22 eingebettet. In der Anordnung nach der Figur 4 ist das Bauteil in seinem Ausgangszustand, in Form einer plastifizierte Matte, zwischen dem Oberteil 21 und dem Unterteil 22 gelegen und ist in dem Werkzeug-Unterteil eine Kavität 23 sowie der darin beweglicher Schieber 24 angeordnet. Das Werkzeug-Unterteil 22 weist den Kunststoff-Zuführungskanal 25 auf, um zu einem vorgegebenen Zeitpunkt Kunststoff in die Kavität 23 einzuführen. Der Schieber 24 kann über eine Verstell-Einrichtung während des Herstellungsverfahrens von einer Ausgangsstellung (Figur 4) in eine Endstellung (Figur 7) bewegt werden.

Generell können sowohl in dem Werkzeug-Oberteil 21 wie in dem Werkzeug-Unterteil 22 ein oder mehrere Einrichtungen zur Herstellung von Anbauteilen 1 vorgesehen sein, wobei jede Einrichtung eine Kavität 23, einen Zuführungskanal 25 oder eine Düse sowie einen beweglichen Schieber 24 aufweist. Der Zuführungskanal 25 wirkt mit einem Heißverteiler zusammen und hat die Aufgabe, das mittels einer ZuführungsEinrichtung wie einer Schnecke oder einem Extruder zuzuführende Kunststoff-Material in einem Soll-Temperaturbereich zu halten, der eine Zuführung des Materials in die Kavität 23 im plastischen Zustand gewährleistet. Vorzugsweise weist der Zuführungskanal 25 ein Ventil typischerweise mit einem Nadelverschluss zum gezielten Auslassen des Materials auf.

Die Kavität 23 bildet zusammen mit dem Schieber 24 die Form zur Ausbildung des Anbauteils bzw. des Retainer-Elements 1 und stellt einen Raum für einen in der Kavität 23 in vorbestimmten Grenzen längsverschiebbaren Schieber 24 zur Verfügung. Die Kavität 23 wird auf einer ersten, dem Schieber 24 zugewandten Seite begrenzt von einer ersten Wandfläche 23a, die sich von der Oberfläche 3b der Trägerschicht 12 aus erstreckt und einer entsprechenden vorderen Schieberfläche 24a des Schiebers 24 gegenüber liegt. Weiterhin weist die Kavität 23 eine der ersten Seite 3b der Schicht 12 gegenüberliegende obere Wandfläche oder Oberseite 23c sowie Seitenwände 23d, 23e auf, die den an der Innenseite anliegenden Bereich der Kavität 23 mit deren Oberseite 23c verbinden. Die Oberseite 23c sowie die Seitenwände 23d, 23e sind vorzugweise eben gebildet, können im formbildenden Teil generell jedoch auch gekrümmt sein oder Kanten und Stufen aufweisen. Weiterhin verlaufen die Seitenwände 23d, 23e vorzugsweise parallel zueinander, jedoch können diese zueinander auch einen Winkel bilden. Das gleiche gilt für die Oberseite 23c in bezug auf die Innenseite 3b, die insbesondere parallel zueinander verlaufen können. In weiteren Anwendungsfällen kann der Schieber 24 eine gekrümmte Schieberfläche 24a aufweisen, die jedoch hinterschnittsfrei sein muss.

Der Schieber 24 weist außer der ersten Oberfläche 24a des Schiebers 24 gegenüberliegenden Wandfläche 23a eine der Oberseite 23c der Kavität gegenüberliegende obere Schieberfläche 24b und eine der Innenseite 3b der Schicht 12 zugewandte untere Schieberfläche 24c sowie den Seitenwänden 23d, 23e zugewandten seitlichen Schieberflächen 24d bzw. 24e auf (die Schieberfläche 24d und die dieser zugewandte Seitenwand 23e sind in den Figuren nicht dargestellt). Die Schieberflächen 24a, 24b, 24c, 24d bzw. 24e sind vorzugsweise eben gebildet, können im formbildenden Teil F generell jedoch auch gekrümmt sein oder Kanten und Stufen aufweisen, wobei die Schieberflächen 24a, 24b, 24c, 24d bzw. 24e so gebildet sind, dass diese einen Verdrängungsbereich gegenüber die Wandflächen der Kavität ausbilden, wobei durch das Zusammenwirken des Verdrängungsbereichs und der Wandflächen innerhalb des Zwischenraums 40 gelegener verformbarer Kunststoff mit der Bewegung des Schiebers 24 innerhalb des sich verändernden Zwischenraums 40 verdrängt werden kann.

Die Oberseite 23c sowie die Seitenwände 23d, 23e der Kavität 23 können in bezug auf die Schieberflächen 24a, 24b, 24c, 24d bzw. 24e in verschiedener Weise und insbesondere parallel zueinander verlaufen. Vorzugsweise verlaufen diese in einem geringen Winkel zueinander, so dass die entsprechenden Flächen Formschrägen bilden. In der dargestellten Ausführungsform der Einrichtung 10 verlaufen diese parallel zueinander. In der Endstellung des Schiebers 24 (Figur 7) definieren die Oberseite 23c sowie die Seitenwände 23d, 23e der Kavität 23 zusammen mit den Schieberflächen 24a, 24b, 24c, 24d bzw. 24e einen Zwischenraum 40, der die Form des herzustellenden Anbauteils 1 bildet. Zur Bestimmung der Endstellung des Schiebers 24 können entsprechende Anschläge im Werkzeug vorgesehen sein.

In einer bevorzugten Ausführungsform des Schiebers 24 weist dieser an der oberen Schieberfläche 24b und an der unteren Schieberfläche 24c jeweils eine Stufe 26 bzw. 27 auf. Die Stufe 26 im Zusammenspiel mit der dieser zugewandten Seite 3b der Schicht 12 sowie die Stufe 27 mit Zusammenspiel mit der Oberseite 23c der Kavität23 bilden in der Endstellung nach Figur 7 die Endstellen des Zwischenraums 40. Der Zwischenraum 40 wird von dem Raum 41 zwischen der Wandfläche 23a und der vorderen Schieberfläche 24a, dem Raum 42 zwischen der Innenseite 3b und der unteren Schieberfläche 24c sowie dem Raum 43 zwischen der Kavitäts-Oberseite 23c und der oberen Schieberfläche 24b gebildet. Von dem Zwischenraum aus gesehen jenseits der Stufe 26, 27 liegt der Schieber 24 an der Oberfläche 3b der Schicht 12 bzw. der Kavitäts-Oberseite 23c an. Der Schieber 24 weist daher einen Querschnittsverjüngten Bereich 28 und einen Verdrängungs-Bereich 29 auf. Der Verdrängungs-Bereich 29 ist eine Stelle oder ein sich in der Verschiebungs-Richtung des Schiebers erstreckender Bereich, der im Zwischenraum 40 befindlichen Kunststoff bei der Bewegung in die Endstellung vor sich her in die Retainer-Kavität drückt. Zu diesem Zweck weist der Verdrängungs-Bereich 29 generell zumindest eine Stelle 31 auf, an der der Schieber 24 an der diesem zugewandten Seite 3b der Bauteil-Schicht 12 bzw. an der Kavitäts-Oberseite 23c bzw. an den Kavitäts-Seitenwänden 24d, 24e anliegt.

Die Begrenzungen des Zwischenraums 40 bilden die Form des mit dem Bauteil 3. herzustellenden Anbauteils 1. Durch das Zusammenwirken des Verdrängungsbereichs und der Wandflächen wird innerhalb des Zwischenraums 40 gelegener plastischer Kunststoff mit der Bewegung des Schiebers 24 innerhalb des sich verändernden Zwischenraums 40 verdrängt, so dass durch die Bewegung des Schiebers 24 in dessen Endstellung, bei der das Volumen des Zwischenraums 40 am kleinsten ist, der verformbare Kunststoff in eine Form eingepresst ist, die der Form des herzustellenden Anbauteils entspricht.

Im Folgenden wird das erfindungsgemäße Verfahren zur Herstellung des Bauteils mit dem Anbauteil beschrieben:

Die Matte zur Bildung der Trägerschicht 12 kann in einem vorbereitenden Schritt vor dem Einlegen in das Werkzeug 20 auf eine Temperatur zwischen 150 und 200 Grad Celsius erhitzt werden. Die Trägerschicht 12 wird gegebenenfalls mit zumindest der weiteren oder Dekorations-Schicht 14 in das Werkzeug 20 eingelegt. Die vordere Schieberfläche 24a des Schiebers 11 ist in einem ersten Herstellungs-Schritt oder in seinem Ausgangszustand einen vorbestimmten Abstand von der ersten Wandfläche der Form 20 bzw. der Kavität 23 entfernt, bei der der Zwischenraum 40 größer ist, als in der Endstellung des Schiebers 24. Der Zwischenraum 40 ist in der Ausgangsstellung des Schiebers 24 vorzugsweise so groß, dass das in diesen einzuführende Material in dem Raum 41 Platz hat, der zwischen der vorderen Schieberfläche 24a und der dieser zugewandte Wandfläche 23a in der Endstellung des Schiebers 24 gelegen ist. Dabei ist vorgesehen, dass das Volumen des Zwischenraums größer als 50% des Volumen des herzustellenden zusätzlichen Formteils beträgt.

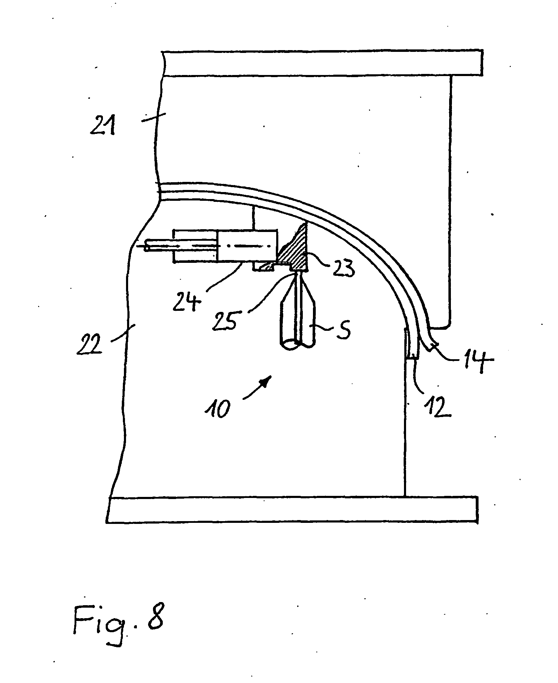

Das Press-Verforrmwerkzeug 20 wird geschlossen, d.h. die Werkzeug-Teile 12, 22 zusammengefahren. Das Matten-Material wird dabei auf einer Temperaur vorzugsweise in einem Bereich zwischen 150 Grad Celsius und 200 Grad Celsius gehalten. Figur 8 zeigt das Press-Verformwerkzeug 20 in der geschlossenen Stellung. Der Kunststoff ist je nach Anwendungsfall vollständig oder teilweise in die Kavität 23 eingelassen.

In einem weiteren Schritt wird eine vorbestimmte Menge des plastifizierten Kunststoffs, z.B. des Polypropylens in die Kavität 23 durch den Kanal 25 mit geringem Druck eingelassen. Der Druck, den der in die Kavität 23 eindringende Kunststoff aufweist, liegt unterhalb von 10 bar. Der von der Extruder-Schnecke auf den Kunststoff auszuübende Druck, also insbesondere der Düsen-Druck der Extruder-Schnecke ist entsprechend vorzusehen. Die Volumenmenge des einzuführenden bzw. eingeführten Kunststoffs ist kleiner als das Volumen der Kavität 23, wobei in den meisten Anwendungsfällen die Volumenmenge des Kunststoffs 70% und in speziellen Anwendungsfällen maximal 50% des Volumens der Kavität 23 beträgt. Im Ausgangsbereich der Extruder-Schnecke oder im Zuführungs-Kanal 25 kann der Druck zwischen 10 und 50 bar liegen, d.h. der Düsen-Druck der Extruder-Schnecke liegt vorzugsweise zwischen 10 und 50 bar, wobei der genaue Wert vom jeweiligen Anwendungsfall und der Zusammensetzung des eingelassenen Kunststoffs abhängt.

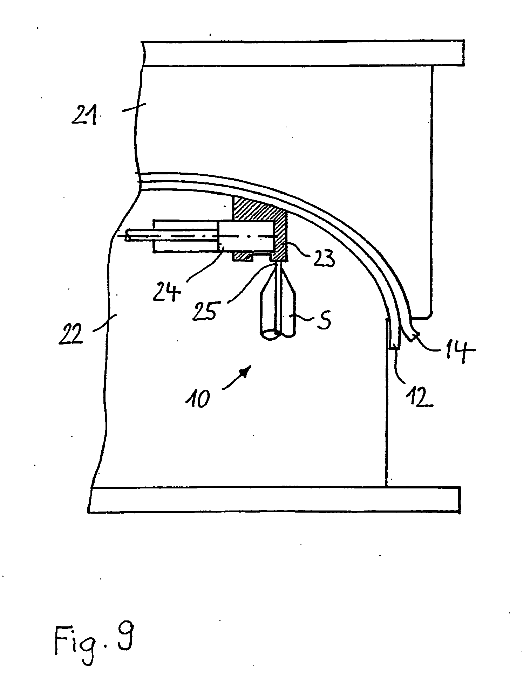

Die Figur 9 zeigt das Press-Verformwerkzeug 20 in der geschlossenen Stellung, wobei der Kunststoff in die Kavität 23 eingelassen und der Schieber 24 in die Endstellung gefahren ist.

Durch die Einführung des plastifizierten Kunststoffs bzw. des Polypropylens in die Kavität 23 entsteht bei der Trägerschicht 12 bzw. Matte sowie bei der gegebenenfalls vorgesehenen weiteren Schicht 14 keine Druckbelastung. Das Einlassen des Kunststoffs bzw. des Polypropylens geschieht alternativ vor oder während der Schieber 24 von seiner Ausgangsstellung in seine Endstellung bewegt wird, nicht jedoch nachdem der Schieber 24 von seiner Ausgangsstellung in seine Endstellung bewegt worden ist. Der Kunststoff bzw. das Polypropylen hat beim Einlassen eine Temperatur von vorzugsweise 200 Grad Celsius +/- 5 Grad Celsius und liegt in einem Bereich zwischen 170 und 220 Grad Celsius. Das Einlassen des Kunststoff bzw. des Polypropylens erfolgt also mit verhältnismäßig geringem Druck in die offene Kavität bzw. Zwischenraum 40 der Guss-Form zur Bildung des zusätzlichen Formteils. Der Kunststoff bzw. das Polypropylen wird also durch die Bewegung des Schiebers 24 in alle Ecken des von der Kavität 23 und dem Schieber 24 in dessen Endstellung gebildeten Zwischenraums 40 gedrückt und füllt diesen aus. Der Schieber 24 übernimmt auf diese Weise die Funktion eines Stempels und wirkt somit als druckbildendes Element. Wegen der Verwendung eines Schiebers 24 erfolgt eine gleichmäßige Verteilung des Kunststoff bzw. das Polypropylen und eine Ausbildung des Anbauteils oder Retainer-Elements.

Während der Schieber 24 in seine Endstellung gefahren wird, ist das Bauteil 3 bzw. die Matte noch in einem plastischen Zustand, d.h. sie hat eine Temperatur von zumindest 130 Grad Celsius.

Die Endstellung des Schiebers 24 (Figur 7) ist eine Stellung in der Kavität 23, bei der zwischen diesen bestehende Zwischenraum 40 der negativen Form des herzustellenden Anbauteils 1 entspricht.

In einer bevorzugten Ausführungsform des Verfahrens bzw. der HerstellungsVorrichtung 20 ist eine Beabstandung oder ein Zwischenraum 27 zwischen der unteren Schieberfläche 24c und der dieser zugewandten Oberfläche der Trägerschicht 12 vorgesehen, die durch Bereitstellung eines Raums 43 ein Verstärkungselement oder Sockel 50 im Bereich der Anschlussstelle des Anbauteils an dem Bauteil 3 bzw. der Schicht 12 bewirkt. Der Schieber 24 kann an seiner unteren Schieberfläche 24c auch so gestaltet sein, dass sich der Zwischenraum 27 nur bereichsweise an derselben von der vorderen Schieberfläche 24a und/oder von einer oder beiden der seitlichen Schieberfläche 24d, 24e aus erstreckt.

Generell kann sich ein solches Verstärkungselement oder ein solcher Sockel oder Erhöhung 50 von jedem Anbauteil-Element an der Oberseite der Trägerschicht 12 erstrecken, das im Endzustand mit derselben verbunden ist oder von derselben aus wegragt. Das Verstärkungselement 50 ist somit im Übergangsbereich zwischen dem fertigen Bauteil 3 und dem Anbauteil vorhanden. Dadurch erhält das Anbauteil bzw. das Bauteil eine höhere Biegesteifigkeit und eine geringere Kraftbelastung pro Flächeneinheit im Anschtussbereich.

In dem dargestellten Ausführungsbeispiel ist der Zwischenraum 40 in der Endstellung des Schiebers 24 derart gestaltet, dass das Bauteils 3 mit dem Anbauteil 1 nach den Figuren 1 und 2 hergestellt wird.

In einem bevorzugten Ausführungsbeispiel des Bauteils 3 mit eine Trägerschicht 12 und einer weiteren Schicht 14 wird diese weitere Schicht 14 auf die Schicht 12 in demselben Herstellungsschritt aufkaschiert, in dem das Anbauteil 1 gebildet wird.

Nach der Formbildung des Bauteils 3 mit dem Anbauteil 1 erfolgt ein Abkühlen des hergestellten Produkts. Dies geschieht vorzugsweise bei einer Temperatur zwischen 20 und 60 Grad Celsius. Erfahrungsgemäß kühlt das gesamte Bauteil 3 etwa nach 40 Sekunden ab. Nach dem Abkühlen erfolgt vorzugsweise ein Zurückfahren des Schiebers 24 sowie ein Öffnen des Werkzeugs 20 zur Entnahme des Bauteils 3.

## Patentansprüche

1. Verfahren zur Herstellung eines Bauteils (3) mit einer Träger-Schicht (12) und einer Dekorations-Schicht (14) mit einem daran angeordneten zusätzlichen Formteil (1) aus Kunststoff mit den folgenden Schritten:
- Einlegen einer plastifizierten Matte mit Faseranteilen als Ausgangsmaterial der Trägerschicht (12) sowie eines Zuschnitts als Ausgangsmaterial für die Dekorations-Schicht (14) in ein Pressverform-Werkzeug (20) mit einer ersten Werkzeug-Hälfte (21) mit einer konturgebenden Anlagefläche zur Anlage des Ausgangsmaterials für die Träger-Schicht (12) und einer zweiten Werkzeug-Hälfte (22) mit einer konturgebenden Anlagefläche (22a) zur Anlage des Ausgangsmaterials für die Dekorations-Schicht (14), wobei die zweite Werkzeug-Hälfte (22) aufweist: zumindest eine Kavität (23) mit einer Gestalt, die die Außenkontur des herzustellenden zusätzlichen Formteils (1) abbildet, und einen in der Kavität (23) über eine Verstell-Einrichtung verschiebbaren Schieber (24) zur Ausbildung einer Innenkontur des herzustellenden zusätzlichen Formteils (1) sowie einen Zuführungs-Kanal (25), der mit einem Mittel zur Einführung von Kunststoff in Verbindung steht, wobei sich der Schieber (24) in einer zurückgefahrenen Stellung befindet,
- Zusammenpressen der Werkzeug-Hälften (21, 22), um die Ausgangsmaterialien der Träger-Schicht (12) und der Dekorations-Schicht (14) miteinander zu verbinden, und währenddessen oder anschließend Einlassen einer vorbestimmten Menge des Kunststoffs im plastischen Zustand durch einen Zuführungskanal (25) in die Kavität (23), wobei das Volumen des in die Kavität (23) eingeführten Kunststoffs kleiner ist als das Volumen der Kavität (23),
- Bewegen des Schiebers (24) in seine Endstellung, in der der Kunststoff den von der Kavität (23) und dem Schieber (24) in dessen Endstellung gebildeten Zwischenraum (40) ausfüllt,
- nach Erkalten des in der Kavität befindlichen Kunststoffs Zurückfahren des Schiebers in seine Ausgangs-Stellung und Auseinanderfahren der Werkzeug-Hälften (21, 22), so dass das Bauteil (3) dem Pressverform-Werkzeug (20) entnehmbar ist.

2. Herstellungsverfahren nach dem Patentanspruch 1, **dadurch gekennzeichnet, dass** der in die Kavität (23) fließende Kunststoff im Bereich der Kavität (23) einen Druck unterhalb von 10 bar aufweist.

3. Herstellungsverfahren nach einem der voranstehenden Patentansprüche, **dadurch gekennzeichnet, dass** das Volumen des in die Kavität (23) eingeführten Kunststoffs 70% des Volumens der Kavität (23) beträgt.

4. Herstellungsverfahren nach einem der voranstehenden Patentansprüche, **dadurch gekennzeichnet, dass** beim Einlassen des Kunststoffs dessen Temperatur 200 Grad Celsius +/- 30 Grad Celsius aufweist.

5. Herstellungsverfahren nach einem der voranstehenden Patentansprüche, **dadurch gekennzeichnet, dass** während der Bewegung des Schiebers (24) in seine Endstellung das Bauteil-Material eine Temperatur im Bereich zwischen 100 und 170 Grad Celsius besitzt.

6. Herstellungsverfahren nach einem der voranstehenden Patentansprüche, **dadurch gekennzeichnet, dass** der Kunststoff ein Polypropylen ist.

7. Herstellungsverfahren nach einem der voranstehenden Patentansprüche, **dadurch gekennzeichnet, dass** die Trägerschicht (12) in ihrem Ausgangszustand aus Polypropylen aus Flachs oder Kenaf, Sisal, Leinen oder Baumwolle oder Glasfaser gebildet ist.

8. Herstellungsverfahren nach einem der voranstehenden Patentansprüche, **dadurch gekennzeichnet, dass** das zusätzliche Formteil (1) zumindest ein Anbauteil oder ein von der Trägerschicht (12) wegstehendes Struktur-Element oder stabförmiges Gebilde ist.

9. Herstellungsverfahren nach einem der voranstehenden Patentansprüche, **dadurch gekennzeichnet, dass** das zusätzliche Formteil (1) eine Halterung zur Aufnahme von Komponenten oder weiterer Bauteile ist.

10. Herstellungsverfahren nach einem der voranstehenden Patentansprüche, **dadurch gekennzeichnet, dass** das zusätzliche Formteil (1) ein Anschluss-Element oder eine Rippe oder ein Abstandselement oder ein Gestaltungselement zur Verbesserung der Festigkeit des Bauteils ist.

11. Vorrichtung (10) zur Herstellung eines Bauteils (3) mit einer Trägerschicht (12) und mit zumindest einem zusätzlichen Formteil (1), die ein Press-Verformwerkzeug (20) zur Verformung einer plastifizierten Matte mit Faseranteilen als Ausgangsmaterial für die Trägerschicht (12) und zumindest eine Einrichtung (10) zur Herstellung des zusätzlichen Formteils aufweist, wobei die Einrichtung (10) zur Herstellung des zusätzlichen Formteils eine Spritzguss-Einrichtung mit einer Kavität (23) ist,
**dadurch gekennzeichnet,**
**dass** die Kavität (23) eine Gestalt aufweist, die die Außenkontur des herzustellenden zusätzlichen Formteils (1) abbildet, und
**dass** die Einrichtung (10) zur Herstellung des zusätzlichen Formteils einen in der Kavität (23) über eine Verstell-Einrichtung zwischen einer Ausgangsstellung und einer Endstellung verschiebbaren Schieber (24) zur Ausbildung einer Innenkontur des herzustellenden zusätzlichen Formteils (1) aufweist, so dass das Formteil in einem Zwischenraum (40) zwischen einer in Bezug auf die vorgesehene Bewegungsrichtung vorderen Schieberfläche (24a) und der dieser zugewandten Kavitätswand (23a) in der Endstellung des Schiebers gebildet werden kann, wobei entsprechende Schieberflächen (24a, 24b, 24c, 24d, 24e) des Schiebers (24) Verdrängungsflächen gegenüber den Wandflächen der Kavität (23) sind, durch den in die Kavität (23) eingeführtes Material im plastischen Zustand mit der Bewegung des Schiebers (24) innerhalb des sich verändernden Zwischenraums (40) verformt werden kann.

12. Vorrichtung (10) zur Herstellung eines Bauteils (3) mit einer Trägerschicht (12) und mit zumindest einem zusätzlichen Formteil (1) nach dem Patentanspuch 11, **dadurch gekennzeichnet, dass** der Schieber (24) derart gestaltet ist, dass sich auf seiner der Trägerschicht (12) des Bauteils (3) zugewandten unteren Schieberfläche (24c) eine sich zumindest von einer der Verdrängungsflächen aus erstreckende Beabstandung (27) zwischen der unteren Schieberfläche (24c) und der dieser zugewandten Oberfläche der Trägerschicht (12) ergibt, so dass ein Anschluss-Element im Bereich der Übergangsstelle des Anbauteils (1) am Bauteil (3) gestaltbar ist.

13. Vorrichtung (10) zur Herstellung eines Bauteils (3) nach dem Patentanspruch 11, **dadurch gekennzeichnet, dass** die Kavität (23) und der Schieber (24) derart gebildet sind, dass das Anbauteil (1) zumindest ein von dem Bauteil wegstehendes Struktur-Element oder ein stabförmiges Gebilde ist.

14. Vorrichtung (10) zur Herstellung eines Bauteils (3) nach einem der voranstehenden Patentansprüche 11 oder 12, **dadurch gekennzeichnet, dass** die Kavität (23) und der Schieber (24) derart gebildet sind, dass das Anbauteil (1) eine Halterung zur Aufnahme von Komponenten oder weiterer Bauteile ist.

15. Vorrichtung (10) zur Herstellung eines Bauteils (3) nach einem der voranstehenden Patentansprüche 10 oder 12, **dadurch gekennzeichnet, dass** die Kavität (23) und der Schieber (24) derart gebildet sind, dass das Anbauteil (1) ein Anschluss-Element oder eine Rippe oder ein Gestaltungselement zur Verbesserung der Festigkeit des Bauteils ist.

## Claims

1. A method for manufacturing a structural part (3) with a carrier layer (12) and a decoration layer (14) with an additional plastic moulded part (1) arranged thereon, with the following steps:
- Introduction of a plasticised mat with fibre content asa starting material for the carrier layer (12), also a pre-cut part as the starting material for the decoration layer (14), into a pressure-moulding tool (20) with a first tool half (21) with a contour-shaping engagement surface forengagement with the starting material for the carrier layer (12), and a second tool half (22) with a contour-shaping engagement surface (22a) for engagement with the starting material for the decoration layer (14), the second tool half (22) comprising at least one cavity (23) with a shape that models the outer contour of the additional moulded part (1) to be produced, and in the cavity (23) a slider (24) that can be moved by means of an adjustment device to form an inner contour of the additional moulded part (1) to be produced, also a supply channel (25) that is connected with a means for the introduction of plastic, wherein the slider (24) is located in a retracted position,
- compression of the tool halves (21, 22) so as to connect the starting materials of the carrier layer (12) and the decoration layer (14) with one another, and during this process or subsequently, the admission of a predetermined quantity of the plastic in the plastic state through a supply channel (25) into the cavity (23), wherein
the volume of the plastic introduced into the cavity (23) is smaller than the volume of the cavity (23),
- movement of the slider (24) into its final position, in which the plastic fills the space (40) formed by the cavity (23) and the slider (24) in its final position,
- after cooling of the plastic in the cavity, retraction of the slider into its initial position, and the movement apart of the tool halves (21, 22) so that the structural part (3) can be extracted from the pressure-moulding tool.

2. The manufacturing method in accordance with claim 1, **characterised in that** the plastic flowing into the cavity (23) has a pressure of less than 10 bar in the region of the cavity (23).

3. The manufacturing method in accordance with one of the preceding claims, **characterised in that** the volume of the plastic introduced into the cavity (23) amounts to 70 % of the volume of the cavity (23).

4. The manufacturing method in accordance with one of the preceding claims, **characterised in that** during the admission of the plastic it has a temperature of 200 degrees Celsius + 1 - 30 degrees Celsius.

5. The manufacturing method in accordance with one of the preceding claims, **characterised in that** during the movement of the slider (24) into its final position the structural part material has a temperature in the range between 100 and 170 degrees Celsius.

6. The manufacturing method in accordance with one of the preceding claims, **characterised in that** the plastic is a polypropylene.

7. The manufacturing method in accordance with one of the preceding claims, **characterised in that** the carrier layer (12) in its initial state is constituted from polypropylene, from flax or kenaf, sisal, linen or cotton, or glass fibres.

8. The manufacturing method in accordance with one of the preceding claims, **characterised in that** the additional moulded part (1) is at least one add-on part, or one structural element projecting from the carrier layer (12), or a bar-shaped entity.

9. The manufacturing method in accordance with one of the preceding claims, **characterised in that** the additional moulded part (1) is a mounting for the accommodation of components or further structural parts.

10. The manufacturing method in accordance with one of the preceding claims, **characterised in that** the additional moulded part (1) is a connecting element, or a rib, or a spacer element, or a shaping element to improve the strength of the structural part.

11. A device (10) for manufacturing a structural part (3) with a carrier layer (12) and with at least one additional moulded part (1), which has a pressure-moulding tool (20) for the moulding of a plasticised mat with fibre content as the starting material for the carrier layer (12), and at least one device (10) for the manufacture of the additional moulded part, wherein the device (10) for the manufacture of the additional moulded part is an injection-casting device with a cavity (23),
**characterised in that**
the cavity (23) has a shape that models the outer contour of the additional moulded part (1) to be manufactured, and
the device (10) for the manufacture of the additional molded part comprises a slider (24) for forming an inner contour of the additional moulding (1) to be manufactured, which can be moved by means of an adjustment device between an initial position and a final position, so that the moulding can be formed in a space (40) in the final position of the slider between a forward slider surface (24a), with reference to the intended direction of movement, and the cavity wall (23a) facing towards the slider surface, wherein corresponding slider surfaces (24a, 24b, 24c, 24d, 24e) of the slider (24) are displacement surfaces relative to the wall surfaces of the cavity (23), by means of which material introduced into the cavity (23) in the plastic state can be moulded with the movement of the slider (24) within the altering space (40).

12. A device (10) for the manufacture of a structural part (3) with a carrier layer (12) and with at least one additional moulded part (1) in accordance with claim 11, **characterised in that** the slider (24) is shaped such that on its lower slider surface (24c) facing towards the structural part (3) a separation distance (27) extending from at least one of the displacement surfaces ensues between the lower slider surface (24c) and the surface of the carrier layer (12) facing towards the slider surface, so that a connecting element can be shaped in the region of the transition point of the add-on part (1) on the structural part (3).

13. The device (10) for the manufacture of a structural part (3) in accordance with claim 11, **characterised in that** the cavity (23) and the slider (24) are constituted such that the add-on part (1) is at least one structural element projecting from the structural part, or a bar-shaped entity.

14. The device (10) for the manufacture of a structural part (3) in accordance with one of the preceding claims 11 or 12, **characterised in that** the cavity (23) and the slider (24) are constituted such that the add-on part (1) is a mounting for the accommodation of components or further structural parts.

15. The device (10) for the manufacture of a structural part (3) in accordance with one of the preceding claims 10 or 12, **characterised in that** the cavity (23) and the slider (24) are constituted such that the add-on part (1) is a connecting element, or a rib, or a shaping element to improve the stability of the structural part.

## Revendications

1. Procédé de fabrication d'une pièce de construction (3) comprenant une couche de support (12) et une couche décorative (14) avec une pièce moulée supplémentaire (1) en plastique agencée dessus, comprenant les étapes suivantes :
- mise en place d'une natte plastifiée ayant un contingent de fibres comme matériau de départ de la couche de support (12) ainsi que d'une découpe comme matériau de départ pour la couche décorative (14) dans un outil de moulage par pression (20) avec une première moitié d'outil (21) comprenant une surface de pose donnant un contour pour poser le matériau de départ pour la couche de support (12) et une deuxième moitié de moule (22) comprenant une surface de pose (22a) donnant un contour pour poser le matériau de départ pour la couche décorative (14), la deuxième moitié de moule (22) présentant au moins une cavité (23) avec une forme qui représente le contour extérieur de la pièce moulée supplémentaire (1) à fabriquer, et un poussoir (24) pouvant être déplacé dans la cavité (23) par un dispositif de déplacement pour former un contour intérieur de la pièce moulée supplémentaire (1) à fabriquer, ainsi qu'un canal d'amenée (25) qui est en liaison avec un moyen pour introduire du plastique, le poussoir (24) se trouvant dans une position rentrée,
- compression entre elles des moitiés de moule (21, 22) pour relier entre eux les matériaux de départ de la couche de support (12) et de la couche décorative (14), et pendant ce temps ou ensuite, introduction d'une quantité prédéterminée du plastique à l'état plastique à travers un canal d'amenée (25) dans la cavité (23), le volume du plastique introduit dans la cavité (23) étant inférieur au volume de la cavité (23),
- déplacement du poussoir (24) dans sa position finale dans laquelle le plastique remplit l'espace intermédiaire (40) formé par la cavité (23) et le poussoir (24) dans sa position finale,
- après refroidissement du plastique se trouvant dans la cavité, retour du poussoir dans sa position de départ et séparation des moitiés de moule (21, 22) de façon à ce que la pièce de construction (3) puisse être retirée de l'outil de moulage par pression (20).

2. Procédé de fabrication selon la revendication 1, **caractérisé en ce que** le plastique fluant dans la cavité (23) présente une pression inférieure à 10 bar dans la région de la cavité (23).

3. Procédé de fabrication selon l'une des revendications précédentes, **caractérisé en ce que** le volume du plastique introduit dans la cavité (23) fait 70% du volume de la cavité (23).

4. Procédé de fabrication selon l'une des revendications précédentes, **caractérisé en ce que** lors de l'introductio n du plastique, sa température affiche 200 degrés Celsius +/- 30 degrés Celsius.

5. Procédé de fabrication selon l'une des revendications précédentes, **caractérisé en ce que** pendant le déplacement du poussoir (24) dans sa position finale, le matériau de la pièce a une température comprise dans la plage entre 100 et 170 degrés Celsius.

6. Procédé de fabrication selon l'une des revendications précédentes, **caractérisé en ce que** le plastique est un polypropylène.

7. Procédé de fabrication selon l'une des revendications précédentes, **caractérisé en ce que** la couche de support (12) est formée dans son état de départ en polypropylène de lin ou de kenaf, de sisal, de toile de lin ou de coton ou de fibres de verre.

8. Procédé de fabrication selon l'une des revendications précédentes, **caractérisé en ce que** la pièce moulée supplémentaire (1) est au moins une pièce à montage additionnel ou un élément structurel à distance de la couche de support (12) ou une construction en forme de bâtonnet.

9. Procédé de fabrication selon l'une des revendications précédentes, **caractérisé en ce que** la pièce moulée supplémentaire (1) est une fixation pour recevoir des composants ou d'autres pièces.

10. Procédé de fabrication selon l'une des revendications précédentes, **caractérisé en ce que** la pièce moulée supplémentaire (1) est un élément de connexion ou une nervure ou un élément d'écartement ou un élément de mise en forme pour améliorer la résistance de la pièce.

11. Dispositif (10) pour la fabrication d'une pièce de construction (3) comprenant une couche de support (12) et avec au moins une pièce moulée supplémentaire (1) qui présente un outil de moulage par pression (20) pour le formage d'une natte plastifiée ayant un contingent de fibres comme matériau de départ pour la couche de support (12) et au moins un dispositif (10) pour fabriquer la pièce moulée supplémentaire, le dispositif (10) pour fabriquer la pièce moulée supplémentaire étant un dispositif de moulage par injection avec une cavité (23),
**caractérisé en ce que**
la cavité (23) présente une forme qui représente le contour extérieur de la pièce moulée supplémentaire (1) à fabriquer, et
**en ce que** le dispositif (10) pour fabriquer la pièce moulée supplémentaire présente un poussoir (24) pour former un contour intérieur de la pièce moulée supplémentaire (1) à fabriquer pouvant être déplacé entre une position de départ et une position finale dans la cavité (23) par un dispositif de déplacement, de façon à ce que la pièce moulée puisse être formée dans un espace intermédiaire (40) entre une face de poussoir en avant (24a) par rapport au sens de déplacement prévu et la paroi de cavité (23a) tournée vers elle, dans la position finale du poussoir, des faces de poussoir correspondantes (24a, 24b, 24c, 24d, 24e) du poussoir (24) étant des faces de déplacement par rapport aux faces de paroi de la cavité (23), à travers lesquelles du matériau introduit dans l'état plastique dans la cavité (23) peut être formé avec le mouvement du poussoir (24) à l'intérieur de l'espace intermédiaire (40) en train de se modifier.

12. Dispositif (10) pour la fabrication d'une pièce de construction (3) comprenant une couche de support (12) et avec au moins une pièce moulée supplémentaire (1) selon la revendication 11, **caractérisé en ce que** le poussoir (24) est ainsi formé que sur sa face de poussoir inférieure (24c) tournée vers la couche de support (12) de la pièce de construction (3), il se crée un espace (27) s'étendant au moins depuis l'une des faces de déplacement entre la face de poussoir inférieure (24c) et la surface tournée vers celle-ci de la couche de support (12), de façon à ce qu'un élément de connexion puisse être formé dans la région du point de passage de la pièce à montage additionnel (1) à la pièce de construction (3).

13. Dispositif (10) pour la fabrication d'une pièce de construction (3) selon la revendication 11, **caractérisé en ce que** la cavité (23) et le poussoir (24) sont ainsi formés que la pièce à montage additionnel (1) est au moins un élément structurel dépassant de la pièce ou une construction en forme de bâtonnet.

14. Dispositif (10) pour la fabrication d'une pièce de construction (3) selon l'une des revendications précédentes 11 ou 12, **caractérisé en ce que** la cavité (23) et le poussoir (24) sont ainsi formés que la pièce à montage additionnel (1) est une fixation pour recevoir des composants ou d'autres pièces.

15. Dispositif (10) pour la fabrication d'une pièce de construction (3) selon l'une des revendications précédentes 10 ou 12, **caractérisé en ce que** la cavité (23) et le poussoir (24) sont ainsi formés que la pièce à montage additionnel (1) est un élément de connexion ou une nervure ou un élément de mise en forme pour améliorer la stabilité de la pièce.
